# EUROPEAN PATENT APPLICATION

(11) **EP 3 808 908 A1**
(43) Date of publication of application: **21.04.2021**
(21) Application number: 19202982.5
(22) Date of filing: 14.10.2019
(51) Int. Cl.: E04B 1/24

(54) **A CONNECTING DEVICE FOR SECURING TWO COMPONENTS TO EACH OTHER AND A METHOD FOR USING THE CONNECTING DEVICE**

(71) Applicant: S&L Access Systems AB, 721 32 Västerås (SE)
(72) Inventor: Strandberg, Michael, SE-723 50 Västerås (SE); Lundberg, Kenneth, SE-723 50 Västerås (SE)
(74) Representative: Swea IP Law AB

(57) **Abstract**

The present invention relates to connecting device (1a) for securing two components (4a-b) to each other. The connecting device comprises a first part (2) for attaching to one of the components and a second part (3) for attaching to the other component. The first part (2) comprises at least one protrusion (5). The at least one protrusion (5) is provided with two grooves (7a-b) extending in parallel on opposite sides of the protrusion. The second part (3) comprises a first locking element (9) and a second locking element (10) designed to at least partly fit in the grooves. The first and second locking elements are arranged movable relative to each other between an opened position and a closed position so that at least one opening (12) for receiving the at least one protrusion is formed between the locking elements in the opened position, and the first and second locking elements are fitted in the grooves in the closed position. The connecting device comprises a mechanism (14) for moving the locking elements between the opened and closed positions and to hold the locking elements in the closed position.

## Description

### Technical field

The present invention relates to a connecting device for securing two components and a method for using the connecting device. The connecting device comprises a first part for attaching to one of the components and a second part for attaching to the other component. The invention particularly relates to a connecting device for connecting two beams to each other.

### Background

In many applications there is a need to secure two components, for example beams, to each other in quick and secure way.

EP3434639A1 discloses a lifting assembly for elevating components to a wind turbine for performing maintenance on the wind turbine. The lifting assembly comprises a plurality of tower segments which together form an elongated tower with an adjustable height. The tower is built close to the wind turbine on site. The tower segments are mechanically secured to each other during building of the tower by using attachment means, e.g. bolts, making the lifting assembly more stable. The tower segments are assembled before the maintenance can take place and dissembled when the maintenance is finished. The time needed for assembling and dissembling of the tower segments is a part of the total maintenance time. Thus, it is extremely important that the connection between the tower segments can be made fast. Further, it is important that the connection between the two tower segments can stand high load and is resistant to torque since the tower is exposed to wind. It is a desire that the connection device can take up pulling forces of more than 300 metric tons.

CN201137213Y discloses a connecting structure for preformed beam and column components. The connecting structure comprises a first part attached to a beam and including a plurality of cylindrical protrusions and cubical hole component comprising a plurality of openings for receiving the protrusion. A disadvantage with this connecting structure is that it cannot stand high forces on the beam.

### Summary

It is an aim of the present invention to at least partly overcome the above problems, and to provide an improved connecting device for securing two components to each other.

This aim is achieved by a connecting device as defined in claim 1.

The connecting device comprises a first part for attaching to one of the components and a second part for attaching to the other component. The first part comprises at least one protrusion provided with two grooves extending in parallel on opposite sides of the protrusion, and the second part comprises first and second locking elements designed to at least partly fit in the grooves, the first and second locking elements are arranged movable relative to each other between an opened position and a closed position so that at least one opening for receiving the at least one protrusion is formed between the locking elements in the opened position, and the first and second locking elements are fitted in the grooves in the closed position, and the connecting device comprises a mechanism for moving the locking elements between the opened and closed positions and to hold the locking elements in the closed position.

The protrusion is clamped between the locking elements. Advantages with the connecting device is that it permits easy and fast assembly and disassembly of the components and can stand high loads. Further, the connection device achieves a connection between two components that is resistant to torque. Thus, the components are prevented from rotating with respect to each other. This is important in many applications, for example, for connecting tower segments including beams made of metal in wind turbine applications since the tower is exposed to wind.

In one aspect, the at least one protrusion is protruding along an axis, and the grooves are extending substantially perpendicular to said axis.

In one aspect, the at least one protrusion has a substantially rectangular cross-section. The rectangular shape makes it easier to manufacture the protrusion. However, the protrusion may also have other shapes, such as a circular cross-section.

In one aspect, the at least one protrusion has two opposite side walls, and each of the grooves is extending across the whole width of one of the side walls. Thus, the connection device can take up large pulling forces.

In one aspect, the first and second locking elements are elongated, and the locking elements are arranged with their longitudinal axes in parallel with the grooves.

In one aspect, the first and second locking elements are wedge shaped and the grooves have a corresponding shape. The grooves are tapering from an opening of the groove towards a bottom of the groove. Thus, the locking elements are guided into grooves, which facilitates the connection of the components.

In one aspect, the mechanism for moving the locking elements is arranged so that the locking elements are locked in the grooves when the locking elements are in the closed position. In one aspect, the mechanism for moving the locking elements is arranged so that the locking elements are pressed against the at least one protrusion and by that the locking element exerts a pressure on the protrusion from two opposite directions. Thus, it is ensured that the screw is secured, and play between the components is prevented.

In one aspect, the mechanism for moving the locking elements comprises a screw joint. The screw joint is also called a screw union or a bolted joint. The screw joint comprises at least one screw provided with threads.

In one aspect, the mechanism for moving the locking elements comprises a screw extending between the first and second locking elements and arranged to move the first and second locking elements between the opened and closed positions and to exert a pressure on the first and second locking elements in the closed position so that the first and second locking elements are pressed against the at least one protrusion. The connection device is locked by screwing. This makes it fast and easy to lock the connection device.

In one aspect, the second locking element comprises a hole provided with internal threads, and a part of the screw is provided with threads being engaged with said internal threads when the screw extends through the hole of the second locking element. The threads make it possible for the screw to move the second locking element with respect to the at least one protrusion and to lock the second locking element in the closed position.

In one aspect, the first locking element is provided with a hole for receiving the screw, the screw extends through the hole of the first locking element, the screw is arranged rotatable relative to the first locking element, and the screw is provided with a stop arrangement configured to prevent the screw from moving linearly relative to the first locking element. The hole of the first locking element is without threads. The screw extends through the holes of the first and second locking elements. The screw is connected to the first locking element so that the screw is arranged rotatable relative to the first locking element and prevented from moving linearly relative to the first locking element. Due to the stop arrangement on the screw, it is possible for the screw to move the first locking element with respect to the at least one protrusion and to lock the second locking element in the closed position.

In one aspect, the stop arrangement comprises two stop members arranged spaced apart and on opposite sides of the hole of the first locking element, and the stop members are attached to the screw. Due to the two stop members on opposite sides of the hole of the first locking element, it is possible to move the first locking element with respect to the at least one protrusion towards the protrusion as well as away from the protrusion upon screwing the screw in opposite directions.

In one aspect, the stop members are ring-shaped and surround the screw.

In one aspect, the screw has a threaded part and a part without threads. The part without threads is provided with the stop arrangement. The second locking element is provided with a threaded hole for receiving the threaded part of the screw and to engage with threads of the screw. The second locking element is provided with a through hole without threads for receiving the part without threads of the screw. Thus, it is possible to have only one screw to move both locking elements.

In one aspect, the at least one protrusion comprises a first protrusion provided with two first grooves extending in parallel on opposite sides of the first protrusion, and a second protrusion provided with two second grooves extending in parallel on opposite sides of the second protrusion, the second grooves are aligned with the first grooves, the locking elements are arranged so that a second opening for receiving the second protrusion is formed between the locking elements in the opened position, and the two locking elements are arranged to fit in the first grooves as well as in the second grooves when the locking elements are in the closed position. This makes it possible to locate the moving mechanism between the protrusions.

In one aspect, the first and second protrusions are arranged spaced apart so that a space is formed between them, and the screw extends in the space between the first and second protrusions. The space formed between the protrusions makes it possible to arrange the screw between the protrusions and to have only one screw, which makes it faster to connect and disconnect the connection device.

In one aspect, the second part comprises a support structure comprising a first and a second side plates arranged on opposite sides of the locking elements. The screw extends from the first side plate, through the hole of the first locking element, through the space between the protrusions, through the threaded hole in the second locking element and to the second side plate.

In one aspect, the second part comprises a support structure comprising a base plate arranged on one side of the first locking element, the base plate is provided with a first though hole, the screw has a screw head designed to fit in the first through hole, and the screw is arranged so that the screw head protrudes on the outside of the base plate when the locking elements are in the opened position, and at least a part of the screw head in inside the first through hole when the locking elements are in the closed position. When the first locking element is in the groove, the screw head will be at least partly entered into the base plate. Thus, it is possible to perform a visual check that the first locking element is in position in the groove.

In one aspect, the device comprises two guide rods arranged spaced apart and in parallel, the guide rods are extending between the first and second locking elements on opposite sides of the at least one opening for receiving the at least one protrusion so that the locking elements and the guide rods enclose the at least one protrusion when the the locking elements are in the closed position. The guide rods guide the movement of the locking elements together with the screw.

The aim is also achieved by a method for securing two components to each other using the connection device.

The method comprises:
- attaching the first part to one of the components,
- attaching the second part to the other of the components,
- moving the first and second parts towards each other so that the at least one protrusion enters through the opening between the locking elements, and
- moving the locking elements towards the at least one protrusion until the locking elements are fitted in the grooves on opposite sides of the protrusion.

In one aspect, the method further comprises further torque tightening the locking elements in the closed position. This is, for example, done by further tightening the screw so that the locking elements exert a pressure on the one or more protrusion from two opposite directions. Thus, it is ensured that the screw is secured, and play between the two components is prevented. It is advantageous to torque tighten the locking elements to achieve a strong connection between the first and second parts.

In one aspect, the components are beams of metal and the first part is attached to one end of one of the beams and the second beam is attached to one end of the other beam.

### Brief description of the drawings

The invention will now be explained more closely by the description of different embodiments of the invention and with reference to the appended figures.
Fig. 1 shows an example of a connecting device according to the invention having a first part including a protrusion and a second part having an opening for receiving the protrusion.
Fig. 2 shows the connection device when the protrusion has entered the opening of the second part and the locking elements are in an opened position.
Fig. 3 shows the connection device with the locking elements in a closed position.
Fig. 4 shows a perspective view of another example of the first part of the connecting device.
Fig. 5 shows the first part shown in figure 4 in a side view.
Fig. 6a shows a perspective view of another example of the second part of the connecting device adapted to fit with the first part shown in figures 4 and 5.
Fig. 6b shows the second part shown in figure 6a in a side view.
Fig. 6c shows second part shown in figures 6a-b in an exploded view.
Fig. 7a shows the second part shown in figures 6a-c with locking elements in an opened position.
Fig. 7b shows the second part shown in figures 6a-c with locking elements in a closed position.
Fig. 8 shows an example of a screw for moving the locking elements.
Figs. 9 - 13 illustrate the use of a connecting device including the first part shown in figs. 4-5 and second part shown in figures 6a-c and figures 7a-b.
Fig. 14 shows a cross-section A-A through the connection device in the closed position shown in figure 13.
Fig. 15 shows a cross-section B-B through the connection device shown in figure 14.

### Detailed description

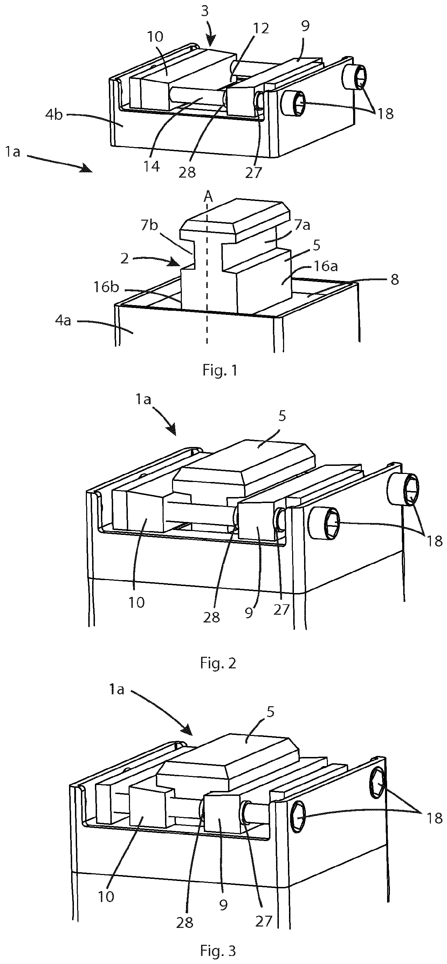

The connecting device will now be described more closely with reference to figure 1. Figure 1 shows an example of a connecting device 1a for attaching two components 4a-b to each other. The connecting device 1a comprises a first part 2 for attaching to one of the components 4a and a second part 3 for attaching to the other component 4b. The components are, for example, beams made of metal. The first part 2 comprises a protrusion 5 provided with two grooves 7a-b extending in parallel on opposite sides of the protrusion 5. In this example the first part 2 has only one protrusion 5. However, the first part may have two or more protrusions with grooves arranged in the same way. Preferably, the grooves 7a-b are elongated. In this example, the protrusion 5 has a substantially rectangular cross-section which makes it easier to manufacture the protrusion. However, the protrusion may have other shapes, for example, a circular cross-section. The protrusion 5 is protruding along an axis A, and the grooves 7a-b are extending substantially perpendicular to the axis A. The protrusion 5 has two opposite side walls 16a-b provided with the grooves 7a-b. In this example, the surfaces of the side walls 16a-b are flat and in parallel. However, the surfaces of the side walls can also be curved. In one aspect, the grooves 7a-b extend across the whole width of the side walls. This increases the ability for the connection device to take up large pulling forces. The first part 2 comprises a base part 8 and the protrusion 5 is attached to the base part. The base part 8 is designed so that it can be attached to the component 4a. For example, the shape of the base part 8 can be adapted to the shape of the component to which it is attached. In this example, the shape of the base part 8 is rectangular to fit into an end of a hollow beam with a square cross-section.

The second part 3 comprises a first locking element 9 and a second locking element 10 designed to at least partly fit in the grooves 7a-b. The first and second locking elements are arranged movable relative to each other between an opened position and a closed position so that an opening 12 for receiving the protrusion 5 is formed between the locking elements 9, 10 in the opened position. The first locking element 9 is fitted in the groove 7a and the second locking element 10 is fitted in the groove7b in the closed position. The first and second locking elements 9, 10 are elongated, and the locking elements are arranged with their longitudinal axes in parallel with the grooves. At least the part of the locking elements 9, 10 is designed to fit in the grooves 7a-b. At least this part of the locking elements 9, 10 may be wedge-shaped and the grooves may have a corresponding shape, i.e. the grooves are tapering from an opening of the groove towards a bottom of the groove. Due to the wedge shape, the locking elements are guided into grooves, which facilitates the connection of the components.

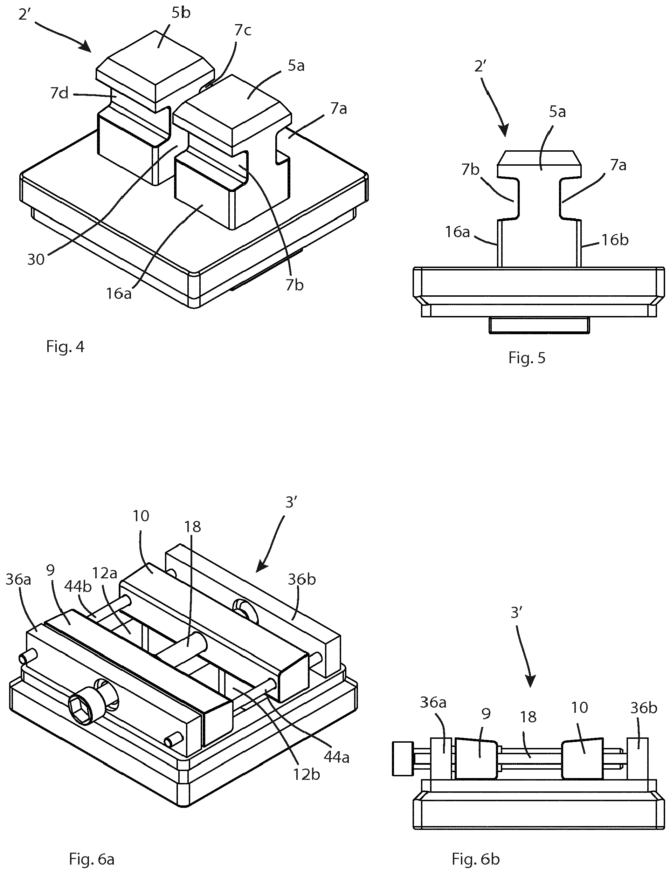

The connecting device comprises a mechanism 14 for moving the first and second locking elements 9, 10 between the opened and closed positions and to hold the locking elements in the closed position. In one aspect, the mechanism 14 for moving the locking elements 9, 10 comprises at least one screw 18 extending between the first and second locking elements 9, 10 and arranged to move the first and second locking elements between the opened and closed positions. The at least one screw 18 locks the first and second locking elements 9, 10 in the grooves 7a-b when the locking elements 9, 10 are in the closed position. In this example, the mechanism 14 comprises two screws 18 extending on opposite sides of the protrusion when the protrusion 5 is inserted in the opening 12. However, the mechanism 14 may have only one single screw 18 extending between the first and second locking elements, as shown in figure 6a. The connection device 1a is locked by screwing. This makes it fast and easy to lock the connection device.

The first and second parts 2, 3 are preferably made of metal to achieve good strength.

The first locking element 9 is provided with at least one through hole for receiving the at least one screw 18. In this example, the first locking element 9 is provided with two through holes for receiving the two screws 18. The at least one screw is arranged rotatable relative to the first locking element but is not allowed to move linearly relative to the first locking element 9. Each of the screws 18 is provided with a stop arrangement configured to prevent the screw from moving linearly relative to the first locking element 9. The at least one through hole of the first locking element 9 is without internal threads to allow the screw to rotate relative to the first locking element 9. Due to the stop arrangement on the screw, it possible for the screw to move the first locking element 9 with respect to the protrusion and to lock the first locking element in the closed position. In one aspect, the stop arrangement comprises two stop members 27, 28 arranged spaced apart and on opposite sides of the holes through the first locking element 9. The stop members 27, 28 are attached to the screws 18. In this example, the stop members are ring-shaped and surround the screw.

In one aspect, the second locking element 10 comprises at least one through hole provided with internal threads, and a part of the screw 18 is provided with threads being engaged with the internal threads when the screw extends through the through hole of the second locking element. The screw and the internal threads of the second locking element 10 form a screw joint. The threads make it possible for the screw to move the second locking element with respect to the at least one protrusion and to lock the second locking element in the closed position.

The use of the connection device will now be described with reference to figures 1 - 3. Figure 1 shows the first and second part 2, 3 at a distance from each other with the opening 12 aligned with the protrusion 5. The locking elements 9, 10 are in an opened position so that the opening 12 is formed between them. In a first step, the first and second parts are moved towards each other along the axis A until the protrusion 5 has entered the opening 12 of the second part and the locking elements 9, 10 are facing the grooves 7a-b, as shown in figure 2. In a next step, the locking elements 9, 10 are moved towards the protrusion 5 until the locking elements are fitted in the grooves 7a-b on opposite sides of the protrusion 5, and the locking elements 9, 10 are in a closed position, as shown in figure 3. Thus, the protrusion 5 is clamped between the locking elements 9, 10. Thus, the connection can stand high loads. Tests have shown that the connection device can take up pulling forces of more than 300 metric tons. In this example, the locking elements 9, 10 are moved to the closed position by means of the screws 18. The connecting device according to the invention permits easy and fast assembly and disassembly of the components.

Optionally, in a next step the screws 18 are further tightened so that a pressure is applied on the first and second locking elements in the closed position. Thus, the first and second locking elements are pressed against the protrusion and by that exert a pressure on the protrusion from two opposite directions. Thus, it is ensured that the screw is secured, and play between the components is prevented.

Figures 4, 5, 6a-c, 7a-b, and 9-15 show another example of a connecting device 1b. Components corresponding to those in figures 1-3 have been given the same reference numerals.

Figures 4 and 5 show an example of a first part 2' of the connecting device 1b. The first part 2' differs from the first part 2 in figures 1- 3 in that it comprises two protrusions 5a and 5b. A first protrusion 5a is provided with two first grooves 7a-b extending in parallel on opposite sides of the first protrusion 5a. A second protrusion 5b is provided with two second grooves 7c-d extending in parallel on opposite sides of the second protrusion 5b. The second grooves 7c-d are aligned with the first grooves 7a-b. The first and second protrusions 5a-b are arranged spaced apart so that a space 30 is formed between them for receiving a part of the screw of the mechanism for moving the locking elements. The space 30 formed between the protrusions 5a-b makes it possible to arrange a screw between the protrusions.

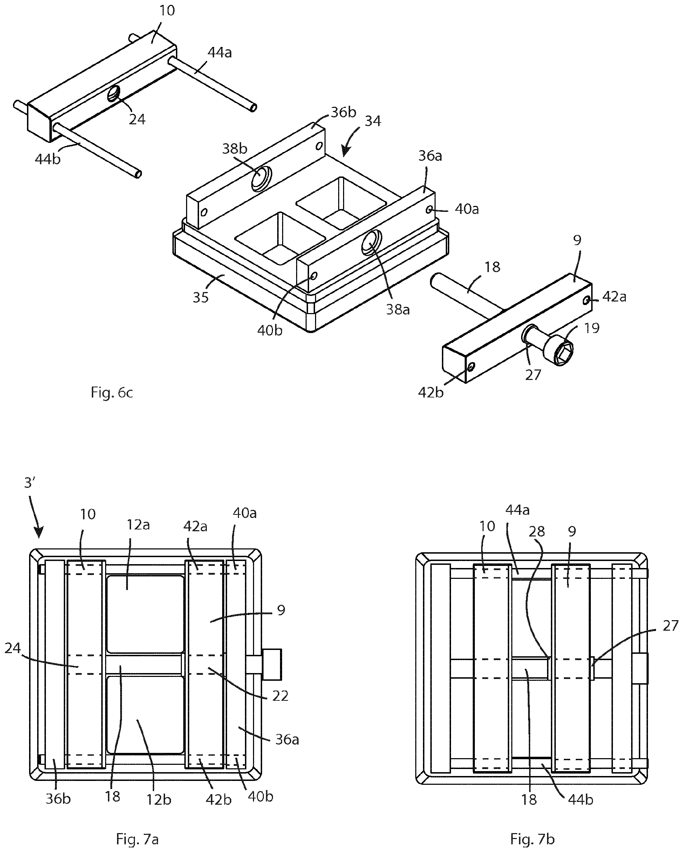

Figures 6a - c show an example of a second part 3' of the connecting device 1b adapted to fit with the first part 2' shown in figures 4 and 5. Figure 6c shows second part 3' shown in figures 6a-b in an exploded view. The locking elements 9, 10 are arranged so that a first opening 12a for receiving the first protrusion 5a is formed between the locking elements in the opened position. The second part 3' differs from the second part 2 in figures 1 - 3 in that the locking elements 9, 10 are arranged so that a second opening 12b for receiving the second protrusion 5b is formed between the locking elements in the opened position. The two locking elements 9, 10 are elongated and arranged to fit in the first grooves 7a-b as well as in the second grooves 7c-d when the locking elements are in the closed position. The second part 3' further differs from the second part 2 in figures 1 - 3 in that a part of the moving mechanism 14 is arranged in the space between the protrusions 5a-b. This makes it possible to have only one screw, which makes assembling and disassembling of the components even faster compared using the connecting device 1a.

In this example, the moving mechanism includes a screw 18 that extends in the space 30 between the first and second protrusions 5a-b when the protrusions 5a-b are penetrating though the first and second openings 12a-b. Having only one screw makes it faster to connect and disconnect the connection device. The first locking element 9 is provided with a through hole 22 without threads for receiving the screw 18, as shown in figure 7a. The second locking element 10 comprises a through hole 24 provided with internal threads, as shown in figure 6c for receiving the screw 18.

The second part 3' comprises a support structure 34. The support structure 34 comprises a base plate 35 designed so that it can be attached to a component. For example, the shape of base plate 35 can be adapted to the shape of the component to which it is attached. In this example, the shape of the base plate 35 is rectangular to fit into an end of a hollow beam with a square cross-section. In this example, the support structure 34 comprises a first side plate 36a and a second side plate 36b attached to opposite ends of the base plate 35. The first side plate 36a is arranged on the outside of the first locking element 9 and the second side plate 36b is arranged on the outside of the second locking element 10.

In one example, the connecting device may comprise two spaced apart guide rods 44a-b extending in parallel through the first and second side plates 36a-b for guiding the movement of the locking elements 9, 10. The guide rods 44a-b are arranged on opposite sides of the openings 12a-b. The locking elements 9, 10 and the guide rods 44a-b enclose the protrusions 5a-b when the locking elements are in the closed position. The guide rods guide the movement of the locking elements together with the screw 18. The locking elements 9, 10 can be arranged linearly movable relative to the guide rods. Alternatively, the guide rods 44a-b are fixedly attached to the second locking element 10 and linearly movable with respect to the first locking element 9 and the side plates 36a-b. In such case, the first locking element 9 is provided with openings 42a-b for receiving the guide rods 44a-b, and the side plates 36a-b are provided with though holes 40a-b for receiving the guide rods 44a-b. Thus, the guide rods can be moved linearly relative to the first locking element 9 and the side plates 36a-b. The guide rods 44a-b extend from the second locking element 10, through the one openings 42a-b in the first locking element 9, to the though holes 40a-b in the second side plate 36a. In one example, at least one of the guide rods 44a-b may be designed so that one end of the guide rod penetrates through one of the though holes 40a-b in the side plate when the second locking element 10 is fitted in the grooves 7b, 7d in the closed position, and the at least one guide rod 44a-b is withdrawn from one of the though holes 40a-b in the side plate when the second locking element 10 is in the opened position. Thus, a visual check can be performed to ensure that the second locking element is fully entered in the grooves.

In one example, the side plate 36a is provided with a first though hole 38a and the side plate 36b is provided with a second though hole 38b for receiving the screw 18, as shown in figure 6c. The though holes 38a-b can be provided with internal threads. The screw 18 has a screw head 19 designed to fit in the first through hole 38a of the side plate, and the screw 18 is arranged so that the screw head 19 protrudes on the outside of the side plate 36a when the first locking element 9 is in the opened position, and at least a part of the screw head 19 is inside the first through hole 38a when the first locking element 9 is in the closed position. Thus, a visual check can be performed to ensure that the first locking element 9 is fully entered in the grooves.

The first and second locking elements 9, 10 are arranged movable relative to each other. Figure 7a shows the second part 3' with the locking elements 9, 10 in an opened position. Openings 12a-b for receiving the protrusions 5a-b are formed between the locking elements 9, 10 in the opened position. Figure 7b shows the second part 3' with locking elements in a closed position. In the closed position, the protrusions are clamped between the locking elements. The locking elements are moved by means of the screw 18.

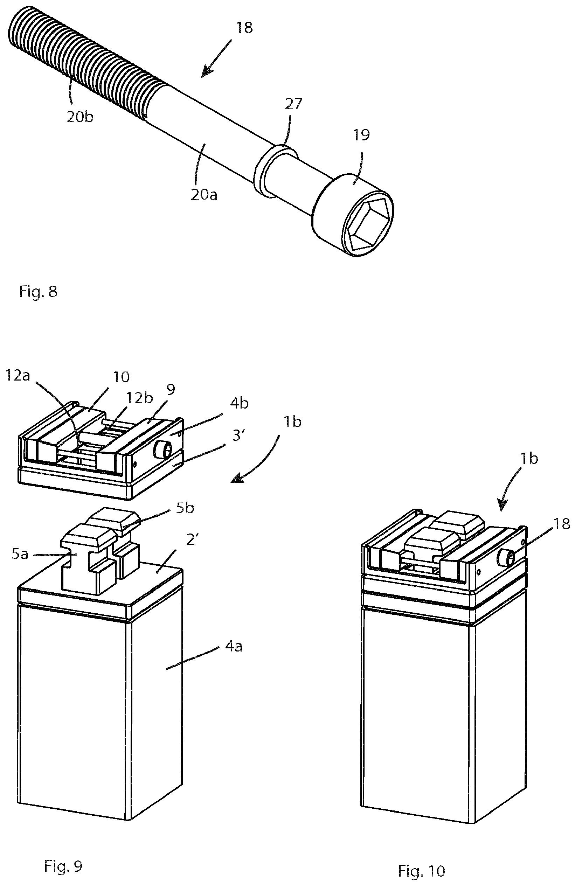

Fig. 8 shows an example of a screw 18 for moving the locking elements. The screw 18 has a first part 20a without threads and a second part 20b provided with threads. The first part 20a is provided with a stop member 27. The first locking element 9 is provided with a through hole 22 for receiving the screw 18. The through hole 22 is adapted to house the first part 20a of the screw 18 and is without internal threads to allow the screw to rotate relative to the first locking element 9. Accordingly, the screw 18 is rotatable relative to the first locking element 9. The screw 18 is provided with a stop arrangement 27, 28 configured to prevent the screw from moving linearly relative to the first locking element 9. Due to the stop arrangement on the screw, it possible for the screw to move the first locking element 9 linearly with respect to the protrusion 5 and to lock the first locking element 9 in the closed position. In this example, the stop arrangement comprises two stop members 27, 28 arranged spaced apart and on opposite sides of the through hole 22 of the first locking element 9. The stop members 27, 28 are attached to the screws 18. At least the stop member 28 is preferably removably attached to the screw to facilitate mounting of the screw.

The second locking element 10 is provided with a threaded hole 24 for receiving the second part 20b of the screw 18 and to engage with threads of the screw, as shown in figure 7a. Thus, screw 18 can move the second locking element 10 with respect to the first locking element 9 when it is rotated.

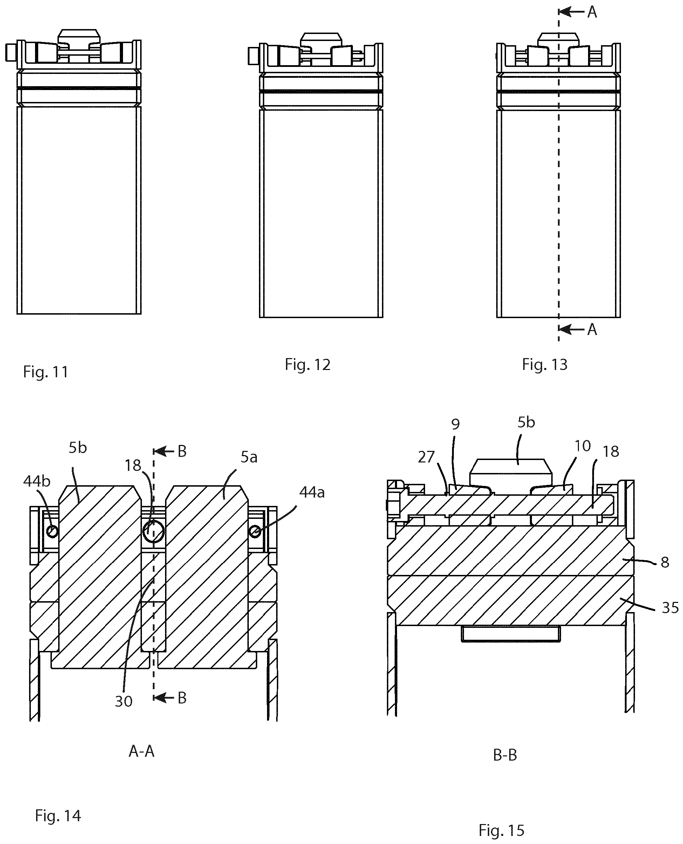

Figures 9 -13 illustrate the use of the connecting device 1b including the first and second parts 2', 3'. In a first step, the first part 2' is attached to one of the components 4a and the second part 3' is attached to the other component 4b. For example, the first and second parts are attached to the components by welding or soldering. The second part 3' is moved to a position above the first part 2', as shown in figure 9. The locking elements 9, 10 are in the opened position. In a next step, the first and second parts 9, 10 are moved towards each other so that the protrusions 5a-b enter through the openings 12a-b between the locking elements, as shown in figures 10 and 11. The threads on the screw 18 and the internal threads of the through hole 24 cooperate to move the second locking element 10 when the screw is rotated. Thereafter, the screw 18 is screwed inwards and by that the second locking element 10 is moved towards the protrusions 5a-b and an outer part of the second locking element 10 is entered into the grooves 7b-d on one side of the protrusions, as shown in figure 12. Upon further screwing of the screw 18, the first locking element 9 is moved towards the protrusions 5a-b and an outer part of the first locking element 9 enters the grooves 7a-c on the other side of the protrusions, as shown in figure 12. The stop member 27 bears on the first locking element 9 and pushes the first locking element 9 towards the protrusions when the screw is screwed inwards. The locking elements 9, 10 are moved towards the protrusions until the locking elements 9, 10 are fitted in the grooves on opposite sides of the protrusion. Optionally, the screw is further torque tightened in a next step so the locking elements exert a pressure on the protrusions.

As seen from the figures 11- 13, the screw head 19 of the screw 18 protrudes on the outside of the component when the locking elements 9, 10 are in the opened position, and the screw head is inside the component when the locking elements 9,10 are in the closed position. Thus, it is possible to perform a visual check that the first locking element is in position in the groove.

When the connecting device 1b is to be disassembled, the screw is screwed in the opposite direction and the stop member 28 bears on the other side of the first locking element 9 and pushes the first locking element 9 away from the protrusions. Due to the threads on the screw 18 and the internal threads of the through hole 24 the second locking element 10 is moved away from the protrusion upon further screwing of the screw 18. The connecting device is open when the locking elements have been moved to the opened position, and then it is possible to move the components away from each other.

Assembling and disassembling of the connection device is easy and fast. It will only take a few seconds to connect or disconnect the components.

Figure 14 shows a cross-section A-A through the connection device in the closed position shown in figure 13. Figure 15 shows a cross-section B-B through the connection device shown in figure 14. In this example, the outer parts of the locking elements are wedge-shaped to facilitate guiding the locking elements into the grooves of the protrusions. As seen from the figures 14, 15, the screw 18 penetrates between the protrusions 5a-b.

The invention can be used to connect different types of components of different shapes to each other.

### Reference list

1a, 1b connecting device
2, 2' first part of the connecting device
3, 3' second part of the connecting device
4a-b components
5 protrusion
5a first protrusion
5b second protrusion
7a-b first grooves
7c-b second grooves
8a base plate of first part
8b base plate of second part
9 first locking element
10 second locking element
12 opening between locking elements
12a first opening between locking elements
12b second opening between locking elements
14 mechanism for moving the locking elements
16a-b side walls of the protrusion
18, 18' screw
19 screw head
20a first part of the screw without threads
20b second part of the screw with threads
22 hole of the first locking element without threads
24 hole of second locking element provided with threads
27 first stop member
28 second stop member
30 space between the protrusions
32 support structure
35 base plate
36a-b side plates
38a-b first though-hole of the side plate
40a-b second though-hole of the side plate
42a-b opening in the first locking element
44a-b guide rods

## Claims

1. A connecting device (1a, 1b) for securing two components to each other, the connecting device comprises a first part (2; 2') for attaching to one of the components and a second part (3, 3') for attaching to the other component, wherein the first part (2; 2') comprises at least one protrusion (5, 5a-b), **characterized in that** the at least one protrusion (5; 5a-b) is provided with two grooves (7a-d) extending in parallel on opposite sides of the protrusion, and the second part (3) comprises a first locking element (9) and a second locking element (10) designed to at least partly fit in the grooves, the first and second locking elements are arranged movable relative to each other between an opened position and a closed position so that at least one opening (12) for receiving the at least one protrusion is formed between the locking elements in the opened position, and the first and second locking elements are fitted in the grooves in the closed position, and the connecting device comprises a mechanism (14) for moving the locking elements between the opened and closed positions and to hold the locking elements in the closed position.

2. The connecting device according to claim 1, wherein the at least one protrusion (5; 5a-b) is protruding along an axis (A) and said grooves (7a-d) are extending substantially perpendicular to said axis (A).

3. The connecting device according to claim 1 or 2, wherein the at least one protrusion (5; 5a-b) has two parallel side walls (16a-b), and each of said grooves (7a-d) extends across the whole width of one of the side walls.

4. The connecting device according to any of the previous claims, wherein said mechanism (14) for moving the locking elements comprises a screw (18) extending between the first and second locking elements (9, 10) and is arranged to move the first and second locking elements between the opened and closed positions.

5. The connecting device according to claim 4, wherein the second locking element (10) comprises a hole (24) provided with internal threads, and a part (20b) of the screw is provided with threads being engaged with said internal threads of the hole (24) when the screw (18) extends through the hole (24) of the second locking element (10).

6. The connecting device according to claim 4 or 5, wherein the first locking element (9) is provided with a hole (22) for receiving the screw (18), the screw extends through the hole (22) of the first locking element, the screw (18) is arranged rotatable relative to the first locking element (9), and the screw is provided with a stop arrangement (27,28) configured to prevent the screw (18) from moving linearly relative to the first locking element.

7. The connecting device according to claim 6, wherein said stop arrangement comprises two stop members (27, 28) arranged spaced apart and on opposite sides of the hole (22) of the first locking element (9), and the stop members (27, 28) are attached to the screw (18).

8. The connecting device according to any of the previous claims, wherein said at least one protrusion comprises a first protrusion (5a) provided with two first grooves (7a-b) extending in parallel on opposite sides of the first protrusion, and a second protrusion (5b) provided with two second grooves (7c-d) extending in parallel on opposite sides of the second protrusion, the second grooves (7c-d) are aligned with the first grooves (7a-b), the first and second locking elements (9, 10) are arranged so that a second opening (12b) for receiving the second protrusion (5b) is formed between the first and second locking elements (9, 10) in the opened position, and said two locking elements (9, 10) are arranged to fit in the first grooves (7a-b) as well as in the second grooves (7c-d) when the locking elements are in the closed position.

9. The connecting device according to claim 4 and 8, wherein the first and second protrusions (5a-b) are arranged spaced apart so that a space (30) is formed between them and said screw (18) extends in the space between the first and second protrusions.

10. A method for securing two components to each other using the connection device (1a-b) according to any of the previous claims, wherein the method comprises:
- attaching the first part (2, 2') to one of the components (4a),
- attaching the second part (3; 3') to the other of the components (4b),
- moving the first and second parts towards each other so that the at least one protrusion (5; 5a-b) enters through the at least one opening (12; 12a-b) between the locking elements (9; 10), and
- moving the locking elements (9, 10) towards the at least one protrusion (5; 5a-b) until the locking elements are fitted in the grooves (7a-b; 7c-d) on opposite sides of the at least one protrusion (5; 5a-b).

11. The method according to claim 10, wherein the method comprises torque tightening the locking elements (9, 10) in the closed position.

12. The method according to claim 10 or 11, wherein the components (4a-b) are beams of metal and the first part (2, 2')is attached to one end of one of the beams and the second part (3; 3') is attached to one end of the other beam.
